# EUROPÄISCHE PATENTSCHRIFT

(11) **EP 0 650 749 B1**
(45) Veröffentlichungstag und Bekanntmachung des Hinweises auf die Patenterteilung: **30.07.1997**
(21) Anmeldenummer: 94115713.3
(22) Anmeldetag: 06.10.1994
(51) Int. Cl.: B01D 3/42, B01D 21/30, B01D 29/60, B01D 21/02, B01D 29/11

(54) **Trenneinrichtung**
Separator system
Dispositif de séparation

(30) Priorität: 03.11.1993 CH 3373/93
(43) Veröffentlichungstag der Anmeldung: 03.05.1995
(73) Patentinhaber: BÜHLER AG, 9240 Uzwil (CH)
(72) Erfinder: Schilling, Dr. Doris, D-78467 Konstanz (DE)
(74) Vertreter: Révy von Belvárd, Peter

(56) Entgegenhaltungen:
- US-A- 3 184 396
- PATENT ABSTRACTS OF JAPAN vol. 16 no. 518 (C-0999) & JP-A-04 193311 (MITSUBISHI PAPER MILLS) 13.Juli 1992,
- DATABASE WPI Week 7801 Derwent Publications Ltd., London, GB; AN 78-01179A & JP-A-52 138 353 (HITACHI PLANT ENGG) , 18.November 1977
- CHEMIE INGENIEUR TECHNIK, Bd. 60, Nr. 8, August 1988 WEINHEIM,GERMANY, Seite 649 F.F.RHIEL ET AL 'Modellgestützte Regelung einer Destillationskolonne'

## Beschreibung

Die Erfindung betrifft eine Trenneinrichtung nach dem Anspruch 1.

Derartige Trenneinrichtungen sind in der chemischen Industrie in den verschiedensten Ausführungsformen bekannt. Es handelt es sich dabei beispielsweise um Setzbecken, in deren unteren Zone sich ein schwererer Stoff absetzt, wogegen der leichtere an der Oberfläche bleibt; um Filtrationseinrichtungen, wie insbesondere osmotische bzw. Mikrofiltrations-Einrichtungen; oder auch Destilliereinrichtungen, insbesonderr zur fraktionierten Destillation, Zentrifugen und ähnliche Trenneinrichtungen.

Solche Trenneinrichtungen werden für zahlreiche Anwendungen eingesetzt, wie zum Entsalzen von Meerwasser, zur Konzentration von Getränken, von Polymerlösungen usw. Beispiele für Schriften, in denen solche Anwendungen beschrieben sind, finden sich etwa in den EP-A-0 043 023; 0 059 106; 0 191 625; 0 205 311; 0 235 421; 0 290 458; oder 0 369 708.

Obwohl die Anwendungsfälle sehr zahlreich sind, geht es letzten Endes stets darum, die Verfahrensführung derart zu halten, dass das Endprodukt bzw. die Endprodukte die Trenneinrichtung in der gewünschten Reinheit verlassen. Dabei kann eine Abweichung in beiden Richtungen unerwünscht sein, weil nämlich das Verfahren gegebenenfalls unwirtschaftlich wird, wenn eine zu grosse Reinheit erzielt wird, anderseits aber Ausschuss entsteht, wenn die Reinheit nicht den gewünschten Werten entspricht.

Aus der JP-A-04 193311 ist eine Regeleinrichtung in einem Wasserreinigungssystem mittels Flockungsmitteln bekannt, bei der drei Messgeräte eingesetzt werden, um nur die Zufuhr von Flockungsmittel zu regeln. Dabei wird das Ausgangsignal eines Spektrophotometers zur Messung einer Chromatizität (Farbe), das am Ausgang der Anlage eingesetzt wird, mit dem Ausgangssignal eines UV-Messgerätes, das am Eingang der Anlage misst, um die Farbe (oder den Farbunterschied) des gereinigten Wassers mittels eines die beiden Ausgangssignale erhaltenden Computers zu errechnen. Damit wird wohl vermieden, dass ein etwa von Anfang an vorhandener Farbton fälschlich bei der Zumessung des Flockungsmittels berücksichtigt wird. Verfärbungen aber, die sich etwa aus dem Betriebe der Anlage ergeben, wie durch unrichtige Auswahl des zugefügten Mittels, ausrinnendes Schmieröl etc., können das Ergebnis einer blossen Farbanalyse aber in sehr unrichtiger Weise beeinflussen und damit einen solchen "Unfall" noch ärger gestalten, wenn man bedenkt, dass das so "gereinigte" Wasser dann wieder in die Umgebung gelassen werden soll.

Der Erfindung liegt daher die Aufgabe zugrunde, eine Trenneinrichtung zu schaffen bzw. eine Trenneinrichtung derart konstruktiv auszubilden, dass diese mit höchster Zuverlässigkeit Komponenten mit jener Reinheit liefert, die für ein bestimmtes Produkt gewünscht wird, und/oder den zeitlichen Verlauf des Trennprozesses derart zu überwachen, dass er im richtigen Zeitpunkte abgebrochen werden kann.

Durch die erfindungsgemäße Ausbildung der Analyseeinrichtung als die chemische Zusammensetzung bestimmendes Spektrometer kann vorteilhaft einfach, aber äusserst exakt, eine beispielsweise chemische Analyse der Komponenten vorgenommen werden, und das Ergebnis der Prüfung als elektrisches Signal der Verfahrenssteuerung bzw. Regelung zumindest mittelbar verfügbar gemacht werden.

Durch diese erfindungsgemässe Konstruktion wird erreicht, dass selbsttätig stets jene Reinheit der getrennten Komponenten erzielt wird, die erwünscht ist. Hierdurch ist auch letztlich erst der ökonomische Betrieb der Trenneinrichtung erreichbar. Anderseits ist auch eine fortlaufende Überwachung des Betriebes der Trenneinrichtung, und damit ihrer Effizienz, möglich, so dass der Betrieb dann abgebrochen werden kann, wenn die gewünschte Reinheit nicht mehr erzielbar ist.

Nach einer bevorzugten Ausführungsform der Erfindung werden die Merkmale des Anspruches 2 vorgeschlagen. Durch diese Anordnung ist es in einfacher Weise möglich, mehr als eine getrennte Komponente zu prüfen, wobei aber die Anzahl von Analyseeinrichtungen zumindest gleich der Anzahl der getrennten Komponenten ist und die Auswertung in einer einzigen Vergleichseinrichtung erfolgt, was kostensparend ist.

Gemäss einer weiteren bevorzugten Ausführungsform der Erfindung ist eine Ausbildung nach Anspruch 3 vorgesehen. Damit wird gerade die Umkehrung der Verhältnisse gegenüber dem erwähnten Stand der Technik erreicht, bei dem drei Messgeräte zur Regelung eines einzigen Parameters eingesetzt wurden: Hier könn en mit einem einzigen Spektrometer, das zur chemischen Analyse ausgebildet ist, mehrere Parameter bzw. Komponenten überwacht und geregelt werden.

Um den baulichen Aufwand und somit auch die Kosten, gering zu halten, wird bei einer bevorzugten Ausführungsform der Erfindung eine Ausbildung nach Anspruch 4 vorgeschlagen. Die Strahlenlenkeinrichtung kann einfach durch einen gegebenenfalls intermittierend motorisch angetriebenen Spiegel gegeben sein, über den in den einzelnen Positionen die Strahlen zwischen Komponente und Spektrometer geführt sind. Doch versteht es sich, dass die Einrichtung zur sequentiellen Prüfung auch von einer Multiplexierungs-Schaltung gebildet sein kann.

Nach einer bevorzugten Ausführungsform der Erfindung gemäss Anspruch 6 ergibt sich eine benutzerfreundliche Bedien- und Kontrolleinrichtung für die Verfahrensführung beim Trennen eines Gemisches, was aber auch den baulichen Aufwand erheblich verringert.

Gemäss weiteren bevorzugten Ausführungsformen der Erfindung ist vorgesehen, dass die Leistung mindestens eines der Trenneinrichtung zugeordneten Gebläse durch die Auswerteeinrichtung steuerbar ist, bzw. dass die Leistung mindestens einer der Trenneinrichtung zugeordneten Pumpe und/oder Dosiergerätes für die Zugabe von chemischen Additiven, wie vorzugsweise Flockungsmitteln od.dgl., für den Trennprozess durch die Auswerteeinrichtung steuerbar ist. Hierdurch kann ebenfalls in einfacher Weise die Regelung der Trenneinrichtung und somit die Qualität der getrennten Komponenten, erzielt werden.

Weitere Einzelheiten der Erfindung ergeben sich anhand der nachfolgenden Beschreibung von in der Zeichnung schematisch dargestellten Ausführungsbeispielen. Es zeigen:
- Fig. 1: ein Schema einer Destillierkolonne für fraktionierte Destillation;
- Fig. 2: ein Absetzbecken, und
- Fig. 3: einen Filtrationsapparat, wobei jede dieser Einrichtungen in erfindungsgemässer Weise regelbar ist.

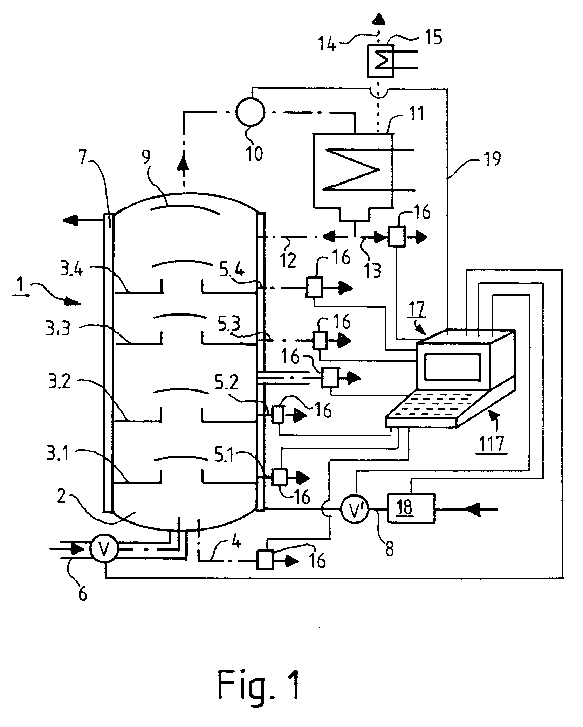

Gemäss Fig. 1 ist eine Destillierkolonne 1 mit vier Böden und einem Sumpf für fraktionierte Destillation vorgesehen, wie sie beispielsweise aus der EP-A-0 295 323 bekannt geworden ist. Sowohl vom Sumpf 2, als auch von den vier darüberliegenden Böden 3.1, 3.2, 3.3 und 3.4 führen Leitungen 4 bzw. 5.1, 5.2, 5.3 und 5.4 weg, um die jeweilige Fraktion abzutransportieren. Dagegen erfolgt der Zustrom vom zu destillierendem Gut, im allgemeinen einer Flüssigkeit über eine Leitung 6. Das zugeführte Material kann bereits selbst eine derartige Temperatur besitzen, dass es innerhalb der Kolonne 1 verdampft oder die Kolonne 1 ist mit einer Heizeinrichtung, z.B. einem Heizmantel 7 versehen, der die Kolonne an ihrem Aussenumfange umgibt. Dabei wird Heizmedium, z.B. Dampf, über eine Leitung 8 zugeführt. Etwaige Dämpfe können am Kopfe der Destillationskolonne 1, zweckmässig hinter einer Abschirmung 9, mit Hilfe eines Sauggebläses 10 abgezogen und einem Kondensator 11 zugeführt werden, wobei das Kondensat entweder über eine Leitung 12 an den obersten Boden 3.4 der Destillationskolonne 1 geführt wird oder über eine Leitung 13 nach aussen. Etwaige verbleibende dampfförmige Bestandteile können über eine Abgasleitung 14, allenfalls nach Kühlung durch einen Wärmetauscher 15 abgeblasen werden.

Die bisher besprochenen Teile gehören im wesentlichen zum Stande der Technik. Es ist nun für die Verfahrensführung wichtig, festzustellen, ob die über die Leitungen 4 und 5.1 bis 5.4 abgenommenen Fraktionen diejenigen sind, die man sich eigentlich gewünscht hat. Selbstverständlich kann es vorkommen, dass es nur auf die Reinheit einer dieser Fraktionen oder mehrerer ankommt und nicht auf alle. Im vorliegenden Falle ist aber jeder der genannten Leitungen, und ebenso der Leitung 13 ein lediglich schematisch angedeutetes Spektrometer 16 zugeordnet. Diese Spektrometer 16 besitzen jeweils eine Beleuchtungseinrichtung, zweckmässig für eine Beleuchtung vorbestimmter spektraler, insbesondere aber breitbandiger, Zusammensetzung, z.B. im Bereiche des Nahen Infrarots, mit deren Hilfe das in der jeweiligen Leitung befindliche Material spektrographisch untersucht wird. Dabei geht man zweckmässig so vor, dass jedes der Spektrometer 16 mit einer Auswerteeinrichtung 117 verbunden ist, die die IST-Daten der Spektrometer 16 mit SOLL-Daten in einer Vergleichseinrichtung 17 vergleicht, die sie in einem (nicht dargestellten) Speicher gespeichert enthält. Wie dies erfolgen kann, ist beispielsweise in der DE-A 43 03 178 beschrieben. Bevorzugt wird jedoch ein Spektrometer verwendet, wie es die CH-Patentanmeldungen 0 3704/92 und 829/93 beschreiben. Im wesentlichen geht es dabei darum, dass das von einer Strahlungsquelle reflektierte, transmittierte oder selbst ausgesandte Licht über mehrere Kanäle analysiert wird, die das Licht mit einer vorgegebenen spektralen Durchlässigkeitsfunktion modulieren, wobei die verschiedenen Kanäle einen breitbandigen Bereich abdecken, welche für alle Kanäle derselbe ist, sich aber für die verschiedenen Kanäle innerhalb dieses breitbandigen Bereiches unterscheiden. Dies kann durch Verwendung von Polarisationsinterferenzfiltern realisiert werden, durch einen Polychromator, Interferenzfilter, usw. Ein solches Gerät erreicht eine relativ grosse Selektivität und benötigt sehr kurze Analysezeiten. Dennoch versteht es sich, dass im Rahmen der Erfindung auch andere Spektrometer Anwendung finden können.

Mit Hilfe der Spektrometer 16 wird die chemische Zusammensetzung der über die Leitungen 4 und 5.1 und 5.4 sowie 13 abgezogenen Substanzen überwacht, in der Vergleichseinrichtung 17 mit den SOLL-Werten verglichen und von der Auswerteeinrichtung 117 her entsprechende Stellglieder zur Beeinflussung der Betriebsparameter der Destillierkolonne 1 beeinflusst. Beispielsweise könnte zwischen den Leitungen 12 und 13 eine Umschalteinrichtung, wie Ventil, Weiche od. dgl. vorgesehen sein, um das Produkt statt durch die Leitung 13 durch die Leitung 12 wiederum in die Kolonne 1 (oder eine weitere Trenneinrichtung) umleiten zu können, falls die Zusammensetzung des durch die Leitung 13 geführten Materiales nicht der gewünschten Zusammensetzung entspricht.

Es kann aber auch der Fall sein, dass eine unscharfe Trennung der Fraktionen auf eine zu hohe Zufuhrmenge an Ausgangsmaterial über die Leitung 6 zurückzuführen sind. Für diesen Fall kann in der Leitung 6 ein Drosselventil V angeordnet sein, dessen Durchlassquerschnitt mit Hilfe der Auswerteeinrichtung 117 regelbar ist, wobei die Ansteuerstufe für dieses Ventil V zur Vereinfachung der Darstellung weggelassen ist.

In ähnlicher Weise kann ein Ventil V' in der Zuleitung 8 für das Heizmedium angeordnet sein, um den Wärmehaushalt für die Fraktionierung zu regeln, doch kann alternativ oder zusätzlich eine Regelung der Beheizung an einer Wärmequelle 18 vorgesehen sein. Da auch der Druck bzw. Unterdruck innerhalb der Destillationskolonne 1 für die Fraktionierung und deren Trennschärfe eine Rolle spielt, besteht eine weitere Alternative darin, die Wirksamkeit des Sauggebläses 10 über eine Leitung 19 zu regeln, wobei die Wirksamkeit durch Drehzahlveränderung und/oder verschieden starke Drosselung des Leitungsquerschnittes erfolgen kann.

Die Anwendungen für solche Regelungen sind zahlreich. Beispielsweise gemäss der WO89/09 845 die Rektifikation azeotroper Zusammensetzungen in einer Destillierkolonne ähnlicher Art durchgeführt werden, wie es in Fig. 1 dargestellt ist. Im Falle der EP-A-0 406 660 soll Brommethylazetat entsprechender Reinheit durch Destillation erhalten werden. In ähnlicher Weise destilliert man, gemäss der EP-A-336 143 zum Erhalt von Methyl-2-Brommethyl-2-Butenoat (III) als Carbapenem-Zwischenprodukt. Ein weiteres Beispiel ist die Herstellung eines Feststoffkatalysators aus einer Mg-Ti-Lösung, die durch Destillation gewonnen wurde, wie dies in der WO91/05 811 beschrieben ist.

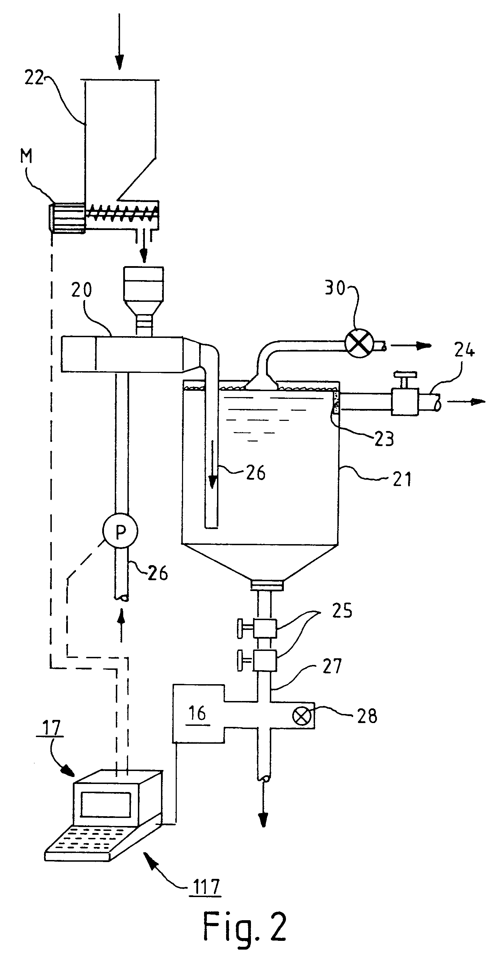

Im Falle der Fig. 2 geht es um die Reinigung von Schlämmen mit Hilfe einer Vorrichtung, wie sie der WO91/11 243 zu entnehmen ist. Hierzu ist ein Absetzbecken 21 vorgesehen, den der zu reinigende Schlamm über eine Leitung 26 mit Hilfe einer Pumpe P zugeführt wird. Die Leitung 26 mündet in eine statische Mischvorrichtung 20, der mit Hilfe einer Dosiervorrichtung 22 Flockungsmittel zugeführt wird. Durch Mischung des Schlammes mit dem Flockungsmittel fällt mindestens ein Teil der im Schlamm enthaltenen Feststoffe als Schwimmstoff aus und kann von der Oberfläche im Becken 21 enthaltenen Flüssigkeitsniveaus mit Hilfe einer Absaugpumpe 30 abgesogen werden. Falls auch flüssige Schwimmstoffe enthalten sind, so lassen sich diese über Filter 23 und eine Leitung 24 ausfiltrieren.

Von der Unterseite des Beckens 21 kann dann die gereinigte Flüssigkeit über Ventile 25 in eine Leitung 27 abgelassen werden, in welcher ein Spektrometer 16 mit einer Durchlichtquelle 28 eingeschaltet ist. Dieses Spektrometer 16 ist wiederum mit einer Auswerteeinrichtung 117 bzw. mit einer Vergleichseinrichtung 17 verbunden, die über entsprechende (nicht dargestellte) Ansteuerstufen die Pumpe P und/oder die Drehzah des Dosiermotors M des Dosiergerätes 22 so regelt, dass die gewünschte Reinheit der Flüssigkeit in der Leitung 27 erhalten wird.

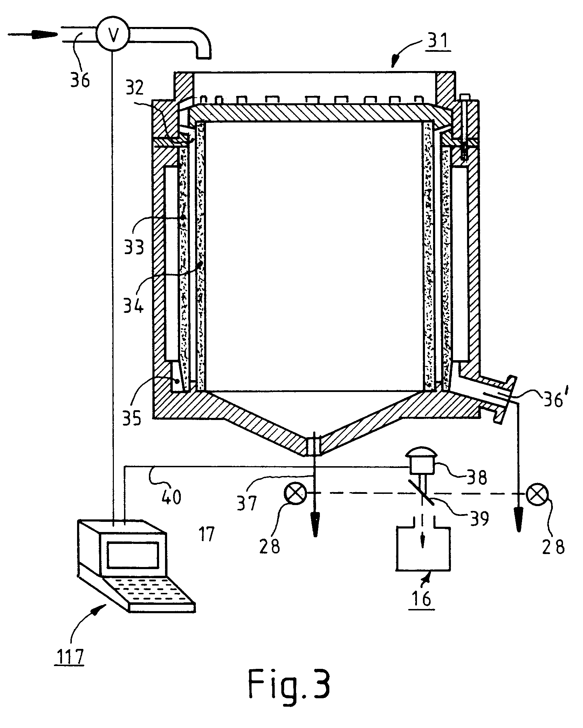

Fig. 3 zeigt das Beispiel einer Filtriereinrichtung 31, wie sie beispielsweise aus der US-A-4 900 440 bekannt geworden ist. Hier wird eine zu filtrierende Flüssigkeit über eine Zufuhrleitung 36 und das schon anhand der Zufuhrleitung 6 beschriebene Ventil V zugeführt, um in einen Ringraum 32 eingespeist zu werden. Der Ringraum 32 ist radial innen und radial aussen jeweils durch ein Filter 33, 34 begrenzt, so dass Filtrat über das Filter 33 in eine äussere Kammer 35 und von dort über eine Leitung 36 austritt, wogegen das durch das innere Filter 34 hindurchgetretene flüssige Material einer lediglich schematisch angedeuteten Leitung 37 zugeführt wird

Im Prinzip könnte auch hier - ähnlich wie in Fig. 1 - jeder dieser Ausgangsleitungen 36', 37 ein gesondertes Spektrometer zugeordnet werden. Um Kosten zu sparen, kann hingegen die Anordnung so getroffen sein, dass jeder der Leitungen 36', 37 eine gesonderte Lichtquelle 28 zugeordnet ist, deren Licht durch die austretende Flüssigkeit in der jeweiligen Leitung 36', 37 hindurchtritt und auf einen mit Hilfe eines Motors 38 gedrehten Spiegel 39 fällt. Ueber den Spiegel 39 wird das Licht der jeweiligen Lichtquelle 28 dem Spektrometer 16 zugeleitet. Das Spektrometer 16 erhält also abwechselnd einmal die Information aus der Leitung 36' und nach Drehung des Spiegels 39 um 180°, aus der Leitung 37. Zur Identifizierung, in welcher Stellung der Spiegel 39 eben steht, d.h. aus welcher Leitung das Spektrometer 16 eben eine Information über die Zusammensetzung der filtrierten Flüssigkeit erhält, ist der Motor 38 zweckmässig mit einem - nicht dargestellten - Winkelgeber versehen, dessen Positionssignale über eine Leitung 40 der Auswerteeinrichtung 117 zugeführt wird. Diese Auswerteeinrichtung 17 erhält also sequentiell die Information über die IST-Zusammensetzung der Flüssigkeit in den Leitungen 36' und 37 und zusätzlich auch die Information über die Leitung 40, welcher Leitung der gerade gemessene IST-Wert entspricht. Daraus lässt sich die Funktionstüchtigkeit der Filter 33, 34 ablesen, um gegebenenfalls das eine oder das andere dieser Filter auszuwechseln. Auch können gegebenenfalls dadurch Rückspülvorgänge an den Filtern 33, 34 ausgelöst werden.

Es versteht sich, dass mit Hilfe des Spiegels 39 eine Art optischer "Multiplexierung" durchgeführt wird, wobei auch die Signale von mehr als zwei Messstellen der Auswerteeinrichtung zugeführt werden können, um so an Investitionskosten zu sparen. Anderseits versteht es sich ebenfalls, dass an Stelle einer optischen Multiplexierung zum gleichen Zwecke eine elektrische bzw. elektronische durchgeführt werden könnte.

Im vorliegenden Falle ist aus Fig. 3 ersichtlich, dass über die Auswerteeinrichtung 117 der Zustrom mit Hilfe des Drosselventiles V geregelt wird. Alternativ kann es auch von Vorteil sein, eine allfällige Beheizung der Vorrichtung 31 zu regeln.

Es versteht sich, dass im Rahmen der Erfindung, zahlreiche verschiedene chemische Trennvorgänge in der geschilderten Weise geregelt werden können, und dass die Erfindung nicht auf die dargestellten drei Beispiele beschränkt ist.

## Patentansprüche

1. Trenneinrichtung zum Trennen von Komponenten eines zumindest zwei solcher Komponenten enthaltenden Gemisches, von denen zumindest eine Komponente von einem Fluid gebildet ist, und wobei die Trenneinrichtung zumindest zwei Zonen aufweist, von denen jeweils eine Zone zur Aufnahme einer der abgetrennten Komponenten vorgesehen ist, wobei für den Betrieb der Trenneinrichtung (1, 21, 31) bzw. zur Führung eines angewandten Trennverfahrens eine Regeleinrichtung vorgesehen ist, die eine Analyseeinrichtung (16) zur zumindest qualitativen Prüfung mindestens einer in einer Zone (4, 5.1, 5.2, 5.3, 5.4, 27, 36', 37) getrennten Komponente, eine Vergleichseinrichtung für ein aus dieser Prüfung abgeleitetes IST-Signal mit mindestens einem gespeicherten und mit einer vorbestimmten Trennqualität in funktionellem Zusammenhang stehendes SOLL-Signal, und mindestens eine, vom Ausgangssignal der Vergleichseinrichtung (17) gesteuerte Stelleinrichtung (V, V', 10, 18, P, 30) für mindestens einen Betriebsparameter der Trenneinrichtung (1, 21, 31) aufweist, wobei als Analyseeinrichtung zur chemischen Analyse mindestens ein, vorzugsweise fernbedienbares und fernabfragbares, Spektrometer (16) vorgesehen ist.

2. Trenneinrichtung nach Anspruch 1, wobei ein oder mehrere Spektrometer (16) zur qualitativen Prüfung der in verschiedenen Zonen (4, 5.1, 5.2, 5.3, 5.4, 27, 36', 37) getrennten Komponenten vorgesehen sind, wobei die von dem einen oder mehreren Spektrometern (16) abgeleitetes IST-Signale selektiv der Vergleichseinrichtung (17) zugeführt und mit gespeicherten relevanten SOLL-Signalen verglichen werden.

3. Trenneinrichtung nach Anspruch 1 oder 2, dadurch gekennzeichnet, dass ein einziger Spektrometer (16) für die qualitative Prüfung mehrerer getrennter Komponenten eingesetzt ist, wobei eine Einrichtung (28, 38, 39) zur sequentiellen Prüfung der getrennten Komponenten unterschiedlicher Zonen (36', 37) von diesem einzigen Spektrometer vorgesehen ist.

4. Trenneinrichtung nach Anspruch 3, dadurch gekennzeichnet, dass die Einrichtung zur sequentiellen Prüfung mehrerer getrennter Komponenten eine zwischen einem lichtelektrischen Sensor des Spektrometers (16) und den einzelnen Zonen (36', 37) angeordnete Strahlenlenkeinrichtung (39) aufweist, die zeitlich nacheinander, vorzugsweise motorisch angetrieben, den Strahlengang zwischen Spektrometer (16) und vorbestimmten Zonen (36', 37) bzw. getrennten Komponenten herstellt.

5. Trenneinrichtung nach Anspruch 3 oder 4, dadurch gekennzeichnet, dass die Strahlenlenkeinrichtung (39) mit einem Positionsmelder, wie ein Winkelgeber ausgerüstet ist, dessen Signale als Adressensignale für Analysesignale vorgesehen sind.

6. Trenneinrichtung nach einem der Ansprüche 1 bis 5, dadurch gekennzeichnet, dass die Vergleichseinrichtung (17) für das IST-Signal eines jeden Spektrometers (16) mit einem SOLL-Signal und vorzugsweise mindestens eine Steuer- und/oder Schaltstufe für die Bildung einer Regeigrösse als mittelbares Steuersignal für mindestens eine Einrichtung zur Veränderung eines Betriebsparameters zu einer von einem Bediener aktivierbaren Auswerteeinrichtung (117) baulich zusammengefasst ausgebildet sind.

7. Trenneinrichtung nach einem der Ansprüche 1 bis 6, dadurch gekennzeichnet, dass zur Veränderung mindestens eines Betriebsparameters mindestens eine Umschalteinrichtung, wie ein Ventil (V), ein Drosselventil, eine Weiche in der Leitung (6, 36) des Komponentengemisches vorgesehen ist.

8. Trenneinrichtung nach Anspruch 6 oder 7, dadurch gekennzeichnet, dass mindestens eine von der Auswerteeinrichtung steuerbare Heizeinrichtung (18) für die Trenneinrichtung (1) vorgesehen ist.

9. Trenneinrichtung nach einem der Ansprüche 1 bis 8, dadurch gekennzeichnet, dass die Leistung mindestens eines der Trenneinrichtung (1) zugeordneten Gebläse (10) durch die Auswerteeinrichtung (117) steuerbar vorgesehen ist.

10. Trenneinrichtung nach einem der Ansprüche 1 bis 9, dadurch gekennzeichnet, dass die Leistung mindestens einer der Trenneinrichtung (21) zugeordneten Pumpe (P) und/oder Dosiergerätes (22) für die Zugabe von Additiven, vorzugsweise von Flockungsmitteln, für den Trennprozess durch die Auswerteeinrichtung (117) steuerbar vorgesehen ist.

## Claims

1. Separating installation for separation of components of a mixture containing at least two such components, at least one of the components being a fluid, the separating installation having at least two zones, each zone being provided for reception of one of the separated components respectively, a regulating means being provided for the operation of the separating installation (1, 21, 31) or for the conduct of the applicable separating process, the regulating means having an analysis means (16) for at least qualitative testing of at least one separated component in a zone (4, 5.1, 5.2, 5.3, 5.4, 27, 36', 37), a comparator means for an actual value signal derived from this test with at least one desired value signal that is stored and has a functional relationship with a predetermined degree of separation, and at least one adjustment means (V, V', 10, 18, P, 30) controlled by the output signal of the comparator means (17) for at least one operating variable of the separating installation (1, 21, 31), at least one spectrometer (16), which can preferably be remote controlled and remote interrogated, being provided by way of the analysis means for the chemical analysis.

2. Separating installation according to claim 1, wherein one or more spectrometers (16) are provided for qualitative testing of the separated components in the different zones (4, 5.1, 5.2, 5.3, 5.4, 27, 36', 37), the actual value signals derived from the one or more spectrometers (16) being selectively fed to the comparator means and compared with relevant stored desired value signals.

3. Separating installation according to claim 1 or 2, characterised in that a single spectrometer (16) is employed for qualitative testing of a plurality of components, means (28, 38, 39) being provided for sequential testing by this single spectrometer of the separated components of distinct zones (36', 37).

4. Separating installation according to claim 3, characterised in that the means for sequential testing of a plurality of separated components has a beam deflection means (39) arranged between a photoelectric sensor of the spectrometer (16) and the individual zones (36', 37) which, preferably motor driven, in timewise succession, establishes the beam path between the spectrometer (16) and the predetermined zones (36', 37) or the separated components.

5. Separating installation according to claim 3 or 4, characterised in that the beam deflection means (39) is equipped with a position message device such as an angle transmitter, whose signals are provided as address signals for analysis signals.

6. Separating installation according to one of claims 1 to 5, characterised in that there are arranged structurally integrated: the comparator means (17) for the actual value signal of each spectrometer (16) with a desired value signal; and preferably at least one control stage and/or switching stage to form a regulating value as an indirect control signal for at least one means for varying an operating variable, for an evaluating means (117) that can be actuated by an operative.

7. Separating installation according to one of claims 1 to 6, characterised in that for varying at least one operating variable, at least one change over means such as a valve (V), a throttle valve, a diverter, is provided in the conduit (6, 36) for the component mixture.

8. Separating installation according to claim 6 or 7, characterised in that the separating installation (1) is provided with at least one heating means (18) controlled by the evaluating means.

9. Separating installation according to one of claims 1 to 8, characterised in that provision is made for the evaluating means (117) to control the output of at least one fan (10) associated with the separating installation (1).

10. Separating installation according to one of claims 1 to 9, characterised in that provision is made for the evaluating means (117) to control the output of at least one pump (P) and/or metering device (22) for the addition of additives, preferably flocculating agents for the separating process, associated with the separating installation (21).

## Revendications

1. Dispositif de séparation pour la séparation de composants d'un mélange contenant au moins deux de ces composants, dont au moins l'un est formé par un fluide, le dispositif de séparation présentant au moins deux zones dont au moins l'une est prévue pour la réception de l'un des composants séparé, tandis que pour l'exploitation du dispositif de séparation (1, 21, 31) ou pour la conduite d'un procédé de séparation utilisé, il est prévu un dispositif de régulation qui comporte un dispositif d'analyse (16) pour l'analyse au moins qualitative d'au moins un composant séparé dans une zone (4, 5.1, 5.2, 5.3, 5.4, 27, 36', 37), un dispositif de comparaison entre un signal effectif dérivé de cette analyse avec au moins un signal de consigne conservé en mémoire et associé fonctionnellement à une qualité prédéterminée de séparation, et au moins un dispositif (V, V', 10, 18, P, 30) commandé par le signal de sortie du dispositif de comparaison (17), pour le réglage d'au moins un paramètre de fonctionnement du dispositif de séparation (1, 21, 31), dans lequel on prévoit comme dispositif d'analyse pour l'analyse chimique au moins un spectromètre (16), qui peut de préférence être commandé et interrogé à distance.

2. Dispositif de séparation selon la revendication 1, dans lequel un ou plusieurs spectromètres (16) sont prévus pour l'analyse qualitative des composants séparés dans différentes zones (4, 5.1, 5.2, 5.3, 5.4, 27, 36', 37), dans lequel les signaux effectifs provenant du ou des spectromètres (16) sont apportés sélectivement au dispositif de comparaison (17) et sont comparés à des signaux de consigne correspondants mis en mémoire.

3. Dispositif de séparation selon les revendications 1 ou 2, caractérisé en ce que l'on utilise un seul spectromètre (16) pour l'analyse qualitative de plusieurs composants séparés, et dans lequel est prévu un dispositif (28, 38, 39) pour l'analyse séquentielle, par cet unique spectromètre, des composants séparés dans différentes zones (36', 37).

4. Dispositif de séparation selon la revendication 3, caractérisé en ce que le dispositif d'analyse séquentielle de plusieurs composants séparés présente un dispositif de déviation des rayonnements (39) disposé entre un détecteur opto-électrique du spectromètre (16) et les zones individuelles (36', 37), qui réalise successivement, et de préférence de manière entraînée par un moteur, le parcours des rayons entre le spectromètre (16) et des zones (36', 37) prédéterminées ou des composants séparés.

5. Dispositif de séparation selon les revendications 3 ou 4, caractérisé en ce que le dispositif (39) de déviation des rayonnements est équipé d'un détecteur de position tel qu'un détecteur d'angle, dont les signaux sont utilisés comme signaux d'adresse pour les signaux d'analyse.

6. Dispositif de séparation selon l'une des revendications 1 à 5, caractérisé en ce que le dispositif de comparaison (17), qui sert à la comparaison du signal effectif de chaque spectromètre (16) avec un signal de consigne, et de préférence au moins un étage de commande et/ou de commutation qui servent à former une grandeur de réglage servant de signal indirect de commande pour au moins un dispositif servant à modifier un paramètre de fonctionnement, sont intégrés dans un dispositif d'évaluation (117) qui peut être activé par un opérateur.

7. Dispositif de séparation selon l'une des revendications 1 à 6, caractérisé en ce que pour modifier au moins un paramètre de fonctionnement, il est prévu au moins un dispositif de commutation tel qu'une vanne (V), une vanne d'étranglement, un clapet, dans la conduite (6, 36) du mélange de composants.

8. Dispositif de séparation selon les revendications 6 ou 7, caractérisé en ce qu'il est prévu au moins un dispositif de chauffage (18) du dispositif de séparation (1), lequel dispositif de chauffage peut être commandé par le dispositif d'évaluation.

9. Dispositif de séparation selon l'une des revendications 1 à 8, caractérisé en ce que la puissance d'au moins un ventilateur (10) associé au dispositif de séparation (1) peut être commandée par le dispositif d'évaluation (117).

10. Dispositif de séparation selon l'une des revendications 1 à 9, caractérisé en ce que le débit d'au moins une pompe (P) associée au dispositif de séparation (21) et/ou d'un appareil de dosage (22) qui sert à l'apport d'additifs, de préférence d'agents floculants pour le procédé de séparation, peut être commandé par le dispositif d'évaluation (117).
